# EUROPEAN PATENT APPLICATION

(11) **EP 4 686 916 A1**
(43) Date of publication of application: **04.02.2026**
(21) Application number: 24191331.8
(22) Date of filing: 29.07.2024
(51) Int. Cl.: G01D 5/347, H02K 11/21

(54) **POSITION DETECTING SYSTEM, LINEAR MOTOR CONVEYING SYSTEM AND CORRESPONDING METHOD**

(71) Applicant: Robert Bosch GmbH, 70442 Stuttgart (DE)
(72) Inventor: Tielen, Niels, 4871LM Etten-Leur (NL); Degreef, Thomas, 1850 Grimbergen (NL); Muganda, James, 5611HW Eindhoven (NL)

(57) **Abstract**

The invention relates to a position detecting system (460) configured for detecting a position of a movable element that is movable, in a moving direction (y, R), relative to a static element. The position detecting system comprises two sensing element rows (461, 462), to be provided at the static element (464), and a target element set (465, 465') comprising two target elements (467, 468), to be provided at the moving element. Each of the two sensing element rows comprises multiple sensing elements (463) arranged one after the other along the sensing element row. The two sensing element rows are arranged essentially parallel to each other and along the moving direction such that the multiple sensing elements of the two sensing element rows are aligned with respect to each other. The two target elements of the target element set are arranged such that each of the two target elements faces a respective one of the two sensing element rows, and such that the two target elements are spaced apart from each other in the moving direction. Each of the sensing elements is configured, upon operation, to generate a signal when one of the two target elements faces the sensing element and is located within a defined distance of the sensing element (Fig. 4).

## Description

The present invention relates to a position detecting system configured for detecting a position of a movable element that is movable, in a moving direction, relative to a static element, to a linear motor conveying system for, e.g., carrying a payload, and to a corresponding method.

### Background of the invention

Linear conveying systems like linear motor conveying systems can be used in different applications, e.g., industrial applications. For example, linear motor conveying systems can be used in the field of high-speed conveyance solutions for in-machine and inter-machine transportation. Such solutions can be inverted linear motor systems, which can control small workpiece carriers accurately and with high movement dynamics. The carriers themselves can be passive.

Document US 9 188 421 B2 describes a position detecting system for use with such linear motor conveying systems.

### Disclosure of the invention

According to the invention, a position detecting system, a linear motor conveying system, a method for detecting a position and a data processing device with the features of the independent claims are proposed. Advantageous embodiments are subject-matter of dependent claims and of the following description.

The invention relates to position detection and, in particular, its use with linear motor conveying systems. Such a linear motor conveying system comprises one or more track modules (a track system) and one or more carrier modules to be guided in the track system. The individual track modules can be standardized modules, several of such modules can be connected to each other to form the track system. A track module has or defines at least one conveying path, i.e., a path along which the carrier modules are to be guided and moved. Such track modules can be of different types, e.g., straight modules, curve modules, and switch modules. Such different modules in required numbers can be connected to form a track system according to specific needs. While straight modules and curve modules typically have one conveying path, a switch module can have a conveying path split into two conveying paths. A carrier module received in such track module or track system can then be moved along such conveying path in a conveying or moving direction. With a typical arrangement of such track modules at the ground, the conveying direction is horizontally oriented.

For operation of such linear motor conveying system, a current position of the one or more carrier modules, relative to or with respect to the track system or an individual track module, should be known as exactly as possible. This position can then be used to control the motion of the carrier module with a high accuracy and position the carrier module on the desired location with a high repeatability.

Multiple technologies can be used as the basis for the sensing principle, i.e. for detecting the position of the carrier module-. Such technologies relate, e.g., to linear encoders. Examples of these technologies are magnetic (using the Hall effect or magneto-resistive effect), inductive, and optical technology etc. However, regardless of the technology, a position sensor typically comprises two parts or components. The first part is the sensing element or multiple sensing elements; these are static and can measure positions. The second part is the sensor target or target element; this is the actual point on a moving element (i.e. carrier module) which can be sensed by the sensing element. Depending on the technology this can be, for example a magnet, a specific selected piece of metal, or even a barcode.

In the following, the position detecting system will in particular be described for use with an linear motor conveying system (or, in particular, an inverted linear motor conveying system) as explained above. However, it is noted that such position detecting system can, in general, be used for detecting a position of a movable element that is movable, in a moving direction, relative to a static element. For the linear motor conveying system, the track system is the static element and the carrier module is the movable element.

A way to implement such position detecting is to use multiple sensing elements with e.g. one of the previously described technologies. It has turned out that a key to a successful position detecting system can be the placement of these sensing elements in combination with the target elements on the movable elements.

An embodiment of the invention relates to such position detecting system configured for detecting a position of a movable element that is movable, in a moving direction, relative to a static element. The position detecting system comprises two sensing element rows, to be provided at the static element, and a target element set comprising two target elements, to be provided at the moving element.

Each of the two sensing element rows comprises multiple sensing elements arranged one after the other along the sensing element row. Further, the two sensing element rows are arranged essentially parallel to each other and along the moving direction such that the multiple sensing elements of the two sensing element rows are aligned with respect to each other. Each sensing element has two ends along the moving direction, typically a front end and a rear end (if following the moving direction forwardly). The requirement that the multiple sensing elements of the two sensing element rows are aligned with respect to each other can then, in particular, mean that the front ends of each set of two sensing elements, one from each of the two sensing element rows, are, at least essentially, at the same position in the moving direction. The same can hold true for the rear ends. In other words, the individual sensing elements do not overlap along the moving direction.

The two target elements of the target element set are arranged such that each of the two target elements faces a respective one - in particular only a respective one - of the two sensing element rows, and such that the two target elements are spaced apart from each other in the moving direction. The requirement that each of the two target elements faces a respective one of the two sensing element rows can also require that the two target elements are spaced apart from each other in a direction perpendicular to the moving direction. Typically, the target elements are arranged in accordance with the respective sensing element rows.

Further, each of the sensing elements is configured, upon operation, to generate a signal when one of the two target elements faces the sensing element and is located within a pre-defined distance of the sensing element. Such signal can be a position signal or can, for example, be processed to become a position signal. If, for example, the sensing elements comprise coils, operating them can require to apply a voltage to them.

It is noted, however, that the kind of sensing elements and corresponding target elements is not of particular relevance. However, it has turned out that the specific arrangement of sensing elements and target elements provides several advantages, e.g., compared to a position detecting system where sensing elements of different sensing element rows are overlapping in the moving direction or where a single target element faces sensing elements of different sensing element rows at the same time.

The proposed design of the position detecting system allows for a compact design, as the complete area of the position detecting system can be used for sensing elements. This results in an optimized size and reduced costs for, e.g., an PCB (Printed Circuit Board) on which the individual sensing elements are arranged or which are part of the individual sensing elements.

Further, this design allows for a straight edge at both ends of the position detecting system. This is very beneficial when used in a transport or conveying system comprising of multiple segments like the track modules mentioned above. Each segment or track module can thus be provided with a certain number of individual sensing elements distributed along the entire length of the segment.

Furthermore, this design allows to easily split the two rows of sensing elements. Therefore, the position detecting system (also called sensor) can be divided into two smaller sub-sensors; of course, also the target elements can be split. This flexibility is very useful in designing such a sensor or position detecting system within the transport segments.

In an embodiment, for each of the two sensing element rows, for each pair of sensing elements arranged consecutively in the moving direction, ends of the sensing elements of the pair that face each other are spaced apart from each other in the moving direction by a pre-defined sensing element distance. This allows for an easy manufacturing.

In an embodiment, ends of the two target elements that face each other in the moving direction (note that the two target elements do not face each other directly as they are assigned to the sensing element rows; this in most cases results in an offset in the lateral direction) are spaced apart from each other in the moving direction by a pre-defined target element distance, wherein the pre-defined target element distance is equal to or greater than the pre-defined sensing element distance. In this way, there is always at least one target element (of the two target elements) facing a sensing element row. This improves accuracy of the signal generated by the sensing elements.

In an embodiment, a length of each of the two target elements in the moving direction is equal to or less than the pre-defined sensing element distance. In this way, a target element facing a certain sensing element row can only face (or be opposite to) one individual sensing element. This improves accuracy of the signal generated by the sensing elements.

In an embodiment, the position detection system is further configured for detecting a position of a further movable element that is movable, in the moving direction, relative to the static element, wherein the movable element and the further movable element are configured to assume a minimum distance to each other in the moving direction. The position detecting system comprises a further target element set comprising two target elements, to be provided at the further moving element. A length of each of the sensing elements is equal to or less than the minimum distance. This allows to determine the position of a further moving element. Note that, this can also be extended to more than two movable elements.

An embodiment of the invention relates to a method for detecting a position of a movable element that is movable, in a moving direction, relative to a static element, wherein two sensing element rows are provided at the static element, and a target element set comprising two target elements is provided at the moving element. Each of the two sensing element rows comprises multiple sensing elements arranged one after the other along the sensing element row. The two sensing element rows are arranged essentially parallel to each other and along the moving direction such that the multiple sensing elements of the two sensing element rows are aligned with respect to each other. The two target elements of the target element set are arranged such that each of the two target elements faces a respective one of the two sensing element rows, and such that the two target elements are spaced apart from each other in the moving direction.

The method comprises operating the sensing elements such that each of the sensing elements generates a signal when one of the two target elements faces the sensing element and is located within a pre-defined distance of the sensing element; the specific way of operation depends on the kind of sensing and target elements used. Further, position signals from one or more of the sensor elements of the position detection system are received, and based on the position signals, a position of the movable element, in particular relative to the static element is determined. Then, an information about the position of the movable element is provided, e.g., for operating a linear motor conveying system or other movable element.

In an embodiment, the position signals comprise a first position signal from a first sensing element of one of the two sensor element rows, and a second position signal from a second sensing element of said one of the two sensor element rows, wherein the first sensing element and the second sensing element are arranged consecutively in the moving direction.

In this case, determining, based on the position signals, the position of the movable element comprises generating a common position signal based on the first position signal and the second position signal, such that when a position of a respective target element is within a first pre-defined range of the first sensing element, the first position signal is used for the common position signal, when the position of the respective target element is within second pre-defined range of the second sensing element, the second position signal is used for the common position signal, and when the position of the respective target element is within an intermediate range between the first pre-defined range and the second pre-defined range, an intermediate signal determined based on the first and the second position signal is used for the common position signal. The position of the movable is then determined based on the common position signal.

The position of the movable element can be determined from the positions measured by the sensing elements. In case the leading target element (seen in moving direction) is fully within the first sensing element, only this position is used to calculate the position of the movable element. This can easily done by taking the measured position and subtracting the distance between the sensor target's location on the mover and the movable element's centre. Same holds when the (trailing) target element is fully within the second sensing element. Now the position of the movable element can be calculated by adding the distance between the sensor target and movable element's centre. Within the transition zone (transition range) the position of the movable element can be calculated based on both positions.

This is a way to accurately determine the position when the position of the respective target elements moves from one of the sensing elements to the next one. In particular, when the target element is in the area between the two sensing elements (can be called a transition zone), both sensing elements will provide a position signal. Thus, both signals can be combined to obtain a better value. In order to achieve a continuous position, the positions provided by both sensing elements are preferably aligned (or "stitched"). If this is not done, then the common position would switch immediately from the first to the second sensing element's position. This would then result into a discontinuity of the common position, as there will always be a small difference in the position signal of the sensing elements as has turned out. The "stitching" of the two sensor positions in the transition zone can be done by taking the (weighted) average of both positions.

In an embodiment, the intermediate signal is determined based on the first and the second position signal such that a proportion of the first position signal used decreases with the position moving from the first pre-defined range towards the second pre-defined range and that a proportion of the second position signal used increases with the position moving from the first pre-defined range towards the second pre-defined range. For example, the proportion of the first signal can linearly be decreased from 100% to 0% within a transition zone, and the proportion of the second signal can linearly be increased from 0% to 100%. Note that other ways are also possible.

An embodiment of the invention relates to a linear motor conveying system, comprising a track system having one or more track modules defining a conveying path, a carrier module, and the position detecting system as described.

In an embodiment, the track system comprises, along at least part of the conveying path, a first side part, a second side part and a bottom part, wherein the first side part and the second side part are arranged opposite to each other. The wherein the track system is configured to receive the carrier module between the first side part and the second side part.

In this case, a first one of the two sensing element rows can be provided at the first side part and a second one of the two sensing element rows can be provided at the second side part. The two target elements can then be provided at said carrier module, such that a first one of the two target elements faces the first one of the two sensing element rows and a second one of the two target elements faces the second one of the two sensing element rows.

In an embodiment, the first one of the two sensing element rows is provided at an upper side of the first side part and the second one of the two sensing element rows is provided at an upper side of the second side part. The two target elements are provided at an upper side of said carrier module.

This includes a split of the two sensing element rows and allows easy provision of the sensing elements at the track system, with only few space required.

In another embodiment, the two sensing element rows are provided at the bottom part, preferably arranged next to each other, and the two target elements are provided at a lower side of said carrier module, such that the two target elements face the two sensing element rows.

In an embodiment, the linear motor conveying system further comprises a controlling system for controlling the linear motor conveying system to move the carrier module within the track system, based on at least one position signal received from the position detecting system.

A data processing device according to the invention, for example a control device or a controlling system for controlling a linear motor conveying system, comprises a processor configured to perform a method according to the invention.

The implementation of a method according to the invention in the form of a computer program or computer program product with program code for carrying out all method steps is also advantageous, since this results in particularly low costs, especially if an executing control device is still used for other tasks and is therefore available anyway. Finally, a machine-readable storage medium is provided with a computer program stored on it as described above. Suitable storage media or data carriers for providing the computer program are, in particular, magnetic, optical and electrical memories, such as hard disks, flash memories, EEPROMs, DVDs, etc. It is also possible to download a program via computer networks (Internet, intranet, etc.). Such a download can be wired or wireless (e.g. via a WLAN network, a 3G, 4G, 5G or 6G connection, etc.).

Further advantages and embodiments of the invention result from the description and the attached drawing.

It goes without saying that the features mentioned above and those still to be explained below can be used not only in the combination specified in each case, but also in other combinations or on their own, without departing from the scope of the present invention.

The invention is shown schematically in the drawing using an exemplary embodiment and is described in detail below with reference to the drawing.

### Brief description of the drawing

- Fig. 1: shows a linear motor conveying system in a perspective view;
- Fig. 2: shows a switch type tack module in a perspective view;
- Fig. 3a: shows a track module and a carrier module in a perspective view;
- Fig. 3b: shows the track module and the carrier module of Fig. 3a in a cross section;
- Fig. 4a: shows a position detecting system in an embodiment;
- Fig. 4b: shows a part of the position detecting system of Fig. 4a;
- Fig. 5: shows a position detecting system in another embodiment; and
- Fig. 6: shows a diagram for illustrating a method in an embodiment.

### Detailed description of the drawing

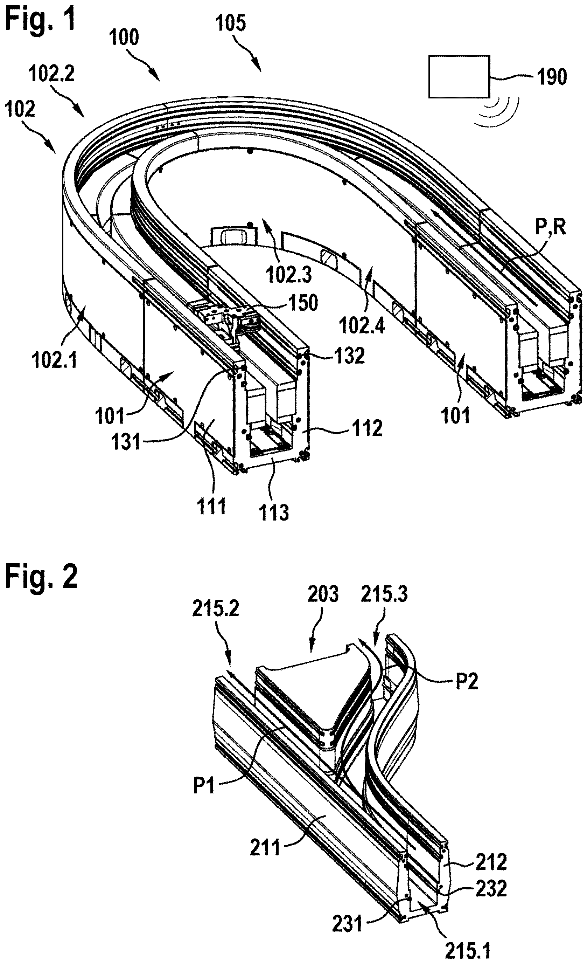

Fig. 1 schematically illustrates a linear motor conveying system 100 in a perspective view. The linear motor conveying system 100 comprises, by means of example, several track modules. Depending on the needs of a particular application for the linear motor conveying system, different types and numbers of track modules can be provided and also connected to each other to provide a track system. Types of track modules are, for example, straight modules, curve modules and switch modules.

By means of example, two track modules 101 are straight modules, and four parts or regions 102.1, 102.2, 102.3, 102.4 form a curve module 102, i.e., the curve module can be a single track module having a single track component. The straight modules 101 are both identical, in the example shown in Fig. 1. It is noted, however, that straight modules can have a different length, where a length is to be seen in moving or conveying direction R along a conveying path P, indicated for a straight module 101 in Fig. 1.

The parts or regions 102.1, 102.2, 102.3, 102.4 indicate, by means of example, regions having different radii and/or curve shapes.

The straight module 101 at the lower left side in Fig. 1 will be described in more detail. The track module 101 comprises a track component 110, and e.g. at least two bearing surfaces 131, 132. By means of example, six bearing surfaces are shown in Fig. 1, while only two of them are indicated with a reference numeral.

Further, the track component 110 comprises a first side part 111, a second side part 112 and a bottom part 113, wherein the first side part 111 and the second side part 113 are arranged opposite to each other. By means of example, the bearing surfaces are formed by support structures like rods, arranged in or inserted into recesses in the first side part 111 and the second side part 112.

It is noted that this way of how a track module is formed, does not only apply to straight module 101 but also to other types of modules like the curve module.

Each of the straight modules and the curve module shown in Fig. 1, have a conveying path, although only shown for one straight module 101, from a respective first to a respective second end. When the track modules are connected to each other, the individual tracking paths are also connected to from a cumulated conveying path, along which the carrier modules are guided and conveyed. Note that carrier modules can be moved or conveyed in both directions of a conveying path, either following the direction of the arrow indicating the conveying path P or reverse. As can be seen from Fig. 1, for example, a conveying path P also provides or defines conveying or moving directions R, again the both directions mentioned.

Further, the linear motor conveying system 100 comprises, by means of example, several carrier modules 150. The track module 101 is configured to receive such a carrier module 150 between the first side part 111 and the second side part 112. This is shown in Fig. 1 but will be illustrated and described in more detail later.

Further, the linear motor conveying system 100 can comprise, in an embodiment, a controlling system 190 for controlling the linear motor conveying system 100 to move the carrier modules 150 within the track modules, i.e., in moving or conveying direction R, indicated in Fig. 1. It is noted that such conveying direction R is a straight line for straight modules, but it is a curved line for curved modules. For operating the linear motor conveying system 100, by means of the controlling system 190, electro-magnetic motor components, for example, at the track modules, have to be controlled.

Fig. 2 schematically illustrates a track module 203 according to an embodiment in a perspective view. Track module 203 is a switch module. Contrary to straight modules or curve modules, the carrier module is not restricted to move from one of two ends to the other of the two ends, i.e., enter the track module at a first end and leave the track module at a second end (having a single conveying path). Rather, the carrier module can enter the switch module at a first end 215.1 and leave the switch module at either a second end 215.3 or at a third end 215.3. The switch module 203 has two conveying paths P1 and P2, where conveying path P2 diverts from conveying path P1.

In order to control a linear motor conveying system comprising such switch module, to make the carrier module using conveying path P1, leaving at the second end 215.2 or using conveying path P2, leaving at the third end 215.3, electro-magnetic motor components, for example, at the track modules (not shown here), are to be controlled such that the carrier module is forced either to the second end 215.2 or to the third end 215.3. If the carrier module enters the switch module at the second end 215.2 or at the third end 215.3, in both cases, the carrier module will leave the switch module 203 at the first end 215.3. In other words, both conveying paths P1, P2 are merged.

Similar to the straight modules and curve modules shown in Fig. 1, the switch module 203 comprises a track component 210 for a conveying path, e.g., P1. The switch module 203 further comprises at least two bearing surfaces 231, 232. By means of example, six bearing surfaces are shown in Fig. 2, while only two of them are indicated with a reference numeral.

Further, the track component 210 comprises, along the conveying path P1, a first side part 211, a second side part 212 and a bottom part 213, wherein the first side part 211 and the second side part 213 are arranged opposite to each other. It is noted that the second side part 211 is interrupted along the conveying path P1, due to a diversion of conveying path P2. Similar to the conveying path P1, the track component comprises, along the conveying path P2, a first side part, a second side part and a bottom part (not indicated with reference numerals here).

Switch modules like the one shown in Fig. 2, can be used together with straight modules and curve modules like the one shown in Fig. 1, in order to create a (complex) track system 105 (see Fig. 1) and linear motor conveying system.

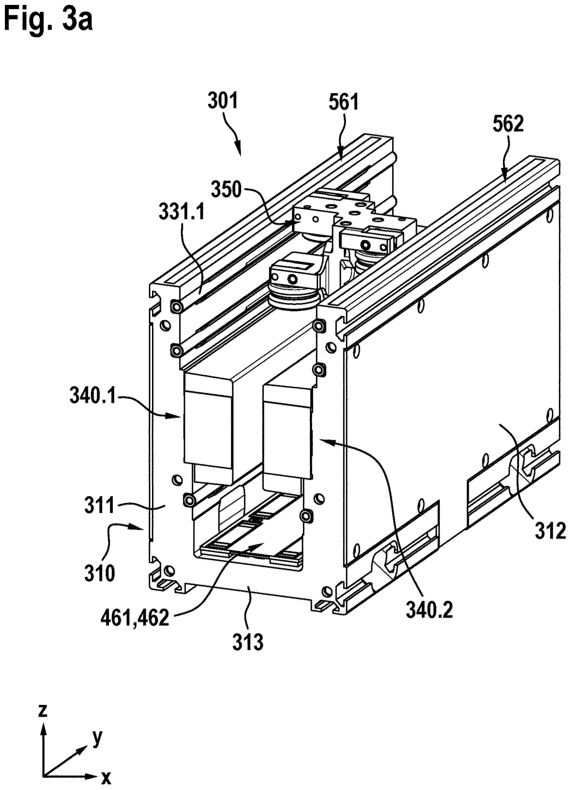

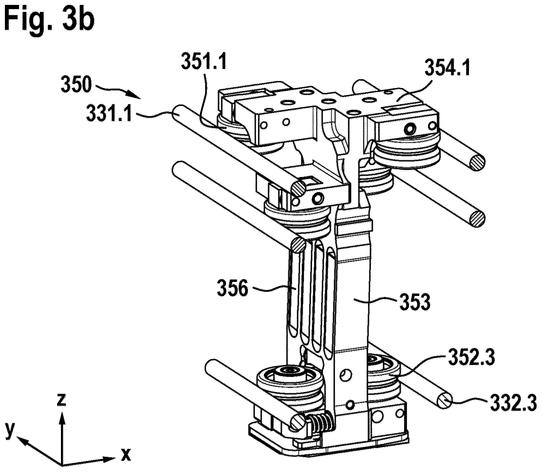

Fig. 3a illustrates a track module 301 and a carrier module 350 in a perspective view. Fig. 3b illustrates the carrier module 350 of Fig. 3a in a perspective view but without most parts of the track module. Figs. 3a and 3b shall be described together in the following. It is noted that the axes could also be defined different, e.g., with the conveying direction in the x-direction.

By means of example and for explanation of the basic structure and composition of a track module, track module 301 is a straight module. Track module 301 can correspond to track module 101 of Fig. 1, however, showing additional components. The following explanations apply also to other types of track modules.

The track module 301 comprises a track component 310, and, by means of example, six bearing surfaces, configured as rods; only bearing surfaces or rods 331.1, 332.3 are referred to by reference numerals. Further, the track component 301 comprises, along a conveying path, a first side part 311, a second side part 312 and a bottom part 313, wherein the first side part 311 and the second side part 313 are arranged opposite to each other. The conveying path is not denoted in Fig. 3a, but extends along the y-direction and can be similar or equal to conveying path P shown in Fig. 1.

In an embodiment, the track 301 further comprises two electro-magnetic motor components, a first electro-magnetic motor component 340.1 and a second electro-magnetic motor component 340.2. The first electro-magnetic motor component 340.1 and the second electro-magnetic motor component 340.2 extend along the conveying path (here: in y-direction). The first electro-magnetic motor component 340.1 is arranged at the first side part 311, and the second electro-magnetic motor component 340.2 is arranged at the second side part 312, such that the first electro-magnetic motor component 340.1 and the second electro-magnetic motor 340.2 component face each other.

In an embodiment, the bottom part 313 is configured to be placed on and/or to be oriented towards and/or to be mounted to a ground surface. Such ground surface would be below the bottom part 313, seen in z-direction in Fig. 3a.

The track module 301 is configured to receive a carrier module 350 between the first side part 311 and the second side part 312 and is, preferably, configured such that the first bearing surfaces or rods match with respective wheels of the carrier module 350.

While Fig. 3a shows the carrier module 350 being received in the track module 301, Fig. 3b shows the carrier module 350 as such. The carrier module 350 comprises a carrier component 353 and, by means of example, six wheels, where only wheels 351.1, 352.3 are referred to by reference numerals. The carrier module 350 is configured to be received between the first side part 311 and the second side part 312 of the track module 301. Each of the wheels matches with a respective one of the six bearing surfaces or rods. This can be seen in Fig. 3c.

In an embodiment, the carrier module 350 further comprises two counterpart electro-magnetic motor components, a first counterpart electro-magnetic motor component 356 (shown in Fig. 3b) and a second counterpart electro-magnetic motor component (not visible in Fig. 3b). Each of such counterpart electro-magnetic motor component can comprise one or more permanent magnets, for example. The first counterpart electro-magnetic motor component 356 and the second counterpart electro-magnetic motor component 356 are arranged at the carrier component 353 opposite to each other, such that the first counterpart electro-magnetic motor component 356 faces the first electro-magnetic motor component 340.1 of the track module 301 and that the second counterpart electro-magnetic motor component faces the second electro-magnetic motor component 340.2 of the track module 301, when received in the track module 301. This can be seen in Fig. 3a.

The first counterpart electro-magnetic motor component 356 matches with the first electro-magnetic motor component 340.1, i.e., these two components electro-magnetically interact with each other in order to from a linear electro-magnetic motor. This also, typically, requires an air gap of appropriate size between these two components. Similarly, the second counterpart electro-magnetic motor component matches with the second electro-magnetic motor component 340.2, i.e., these two components electro-magnetically interact with each other in order to from a linear electro-magnetic motor. This also, typically, requires an air gap of appropriate size between these two components. Thus, the track module 301 allows receiving a state of levitation of the carrier module 350 between the two side parts of the track module 301 (in addition to the support by the wheels).

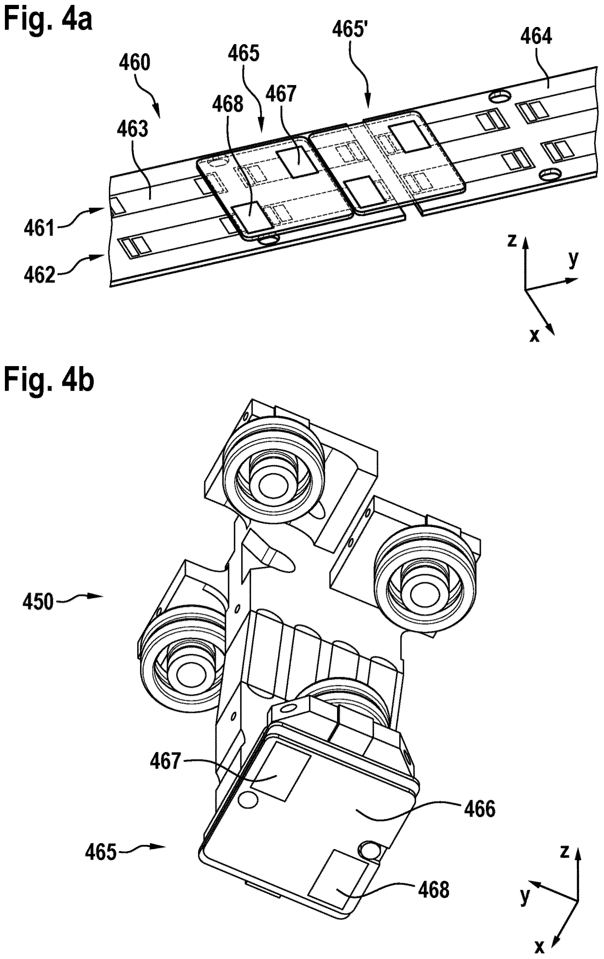

Figs. 4a, 4b illustrate a position detecting system 460 in an embodiment, configured for detecting a position of a movable element that is movable, in a moving direction, relative to a static element. For example, such position detecting system 460 can be used with a linear motor conveying system shown in Figs. 1 to 3b, where the moving direction R is along axis y (note that the axes x, y, z shown in Figs 4a, 4b comply with those shown in Figs. 1 to 3b).

While Fig. 4a shows most parts of the position detecting system 460, Figs. 4b shows a carrier module 450 having a part of a position detecting system thereon. The carrier module 450 can correspond to the carrier modules 150 and 350.

The position detecting system 460 comprises two sensing element rows 461, 462. Each of the two sensing element rows comprises multiple sensing elements - one of them is denoted 463 - arranged one after the other along the sensing element row (this is along direction y in Fig. 4a). The two sensing element rows are arranged essentially parallel to each other and along the moving direction (this is along direction y in Fig. 4a) such that the multiple sensing elements 463 of the two sensing element rows 461, 462 are aligned with respect to each other.

The position detecting system 460 further comprises a target element set 465 comprising two target elements 467, 468. The two target elements of the target element set are arranged such that each of the two target elements 467, 468 faces a respective one of the two sensing element rows 461, 462, and such that the two target elements are spaced apart from each other in the moving direction. By means of example, target element 467 faces sensing element row 461, and target element 468 faces sensing element row 462.

While in Fig. 4a, the target element set 465 is shown as such, Fig. 4b illustrates a way of how to arrange the target element set 465 at the carrier module 450, i.e. at the bottom side of the carrier module 450. In this example, the two sensing element rows 461, 462 can be arranged at the bottom part of the track module or track system, as shown in Fig. 3a. The two sensing element rows 461, 462 can be arranged next to each other. Further, several sensing elements, from both rows, can be arranged at a common PCB 464, for example.

The target elements 467, 468 can, for example, be arranged at a plate or other mounting structure 466 (see Fig. 4b) in order to provide the required arrangement of the target elements 467, 468 with respect to each other.

Each of the sensing elements is configured, upon operation, to generate a signal when one of the two target elements faces the sensing element and is located within a pre-defined distance of the sensing element. A data processing device or controlling system 190 like shown in Fig. 1 can be used for operating the position detecting system or sensing elements, and receive the respective signals.

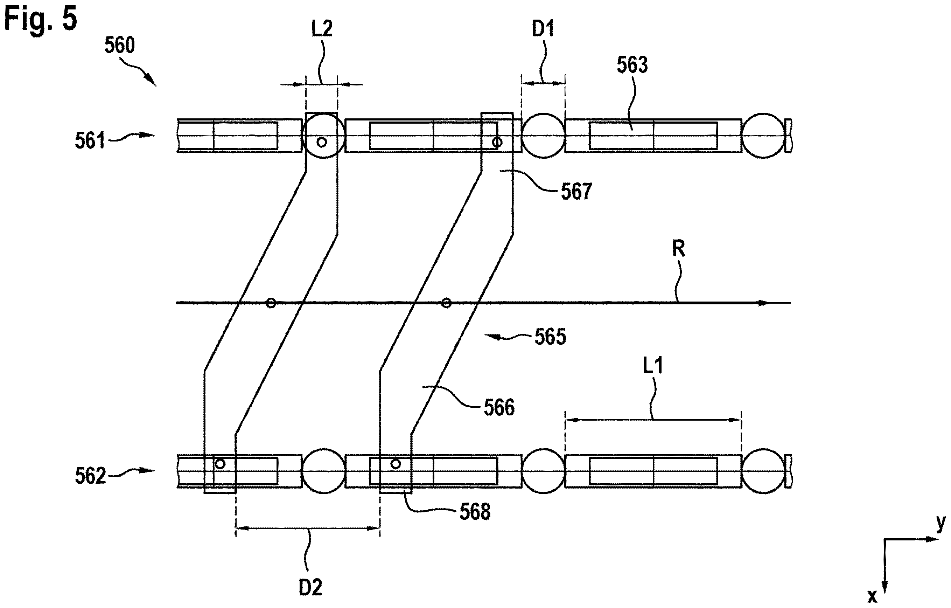

Fig. 5 illustrates a position detecting system 560 in an embodiment, configured for detecting a position of a movable element that is movable, in a moving direction, relative to a static element. For example, such position detecting system 560 can be used with a linear motor conveying system shown in Figs. 1 to 3b, where the moving direction R is along axis y (note that the axes x, y shown in Figs 4a, 4b comply with those shown in Figs. 1 to 3b).

The position detecting system 560 comprises two sensing element rows 561, 562. Each of the two sensing element rows comprises multiple sensing elements - one of them is denoted 563 - arranged one after the other along the sensing element row (this is along direction y in Fig. 5). The two sensing element rows are arranged essentially parallel to each other and along the moving direction R (this is along direction y in Fig. 5) such that the multiple sensing elements 563 of the two sensing element rows 561, 562 are aligned with respect to each other.

Other than the embodiment of Figs. 4a, 4b, the two sensing element rows 561, 562 are not arranged next to each other but are split. For example, sensing element row 561 can be provided at an upper side of the first side part 311 and sensing element row 562 can be provided at an upper side of the second side part 312, as shown in Fig. 3a.

The position detecting system 560 further comprises a target element set 565 comprising two target elements 567, 568. The two target elements of the target element set are arranged such that each of the two target elements 467, 468 faces a respective one of the two sensing element rows 561, 562, and such that the two target elements are spaced apart from each other in the moving direction. By means of example, target element 567 faces sensing element row 561, and target element 568 faces sensing element row 562.

A way of how to arrange the target element set 565 at the carrier module is to arrange it at a top side of the carrier module 450, such that the target elements are correspondingly arranged, see Fig. 3a. and the free top side of the carrier module 350, where such target element set can be placed.

Further, several sensing elements, from one row all, can be arranged at a common PCB, for example. The target elements 567, 568 can, for example, be arranged at a plate or other mounting structure 566 (see Fig. 5) in order to provide the required arrangement of the target elements with respect to each other.

Further, Fig. 5 illustrates pre-defined sensing element distance D1, by which ends of the sensing elements of the pair that face each other are spaced apart from each other in the moving direction R. Further, Fig. 5 illustrates pre-defined target element distance D2, by which ends of the two target elements that face each other in the moving direction are spaced apart from each other in the moving direction R. Distance D2 is greater than distance D1.

Further, Fig. 5 illustrates a length L1 of each of the sensing elements, and a length L2 of each of the two target elements in the moving direction R. The length L2 is less than the pre-defined sensing element distance D1. The length L1, in combination with the distance D1, can be chosen such that it fits a length of a track module.

Fig. 5 illustrates, in a diagram, signal values on axis 600 versus position on axis 602. Area 610 shows where a first sensing element is located, and area 612 shows where a second sensing element is located, which is arranged next in the moving direction. Area 614 is a transition zone between the two sensing elements.

Signal 622 is a position signal of the first sensing element in area 610, which signal is generated from the sensing element when a target element faces the sensing element at the position defined by axis 600. The position of the target element can, for example, be defined at its center. Signal 632 is a position signal of the second sensing element in area 612, which signal is generated from the sensing element when the target element faces the sensing element at the position defined by axis 600. The dotted lines 620 and 630 depict a strength of the signal 622 and 632, respectively, what is also part of the signal as such.

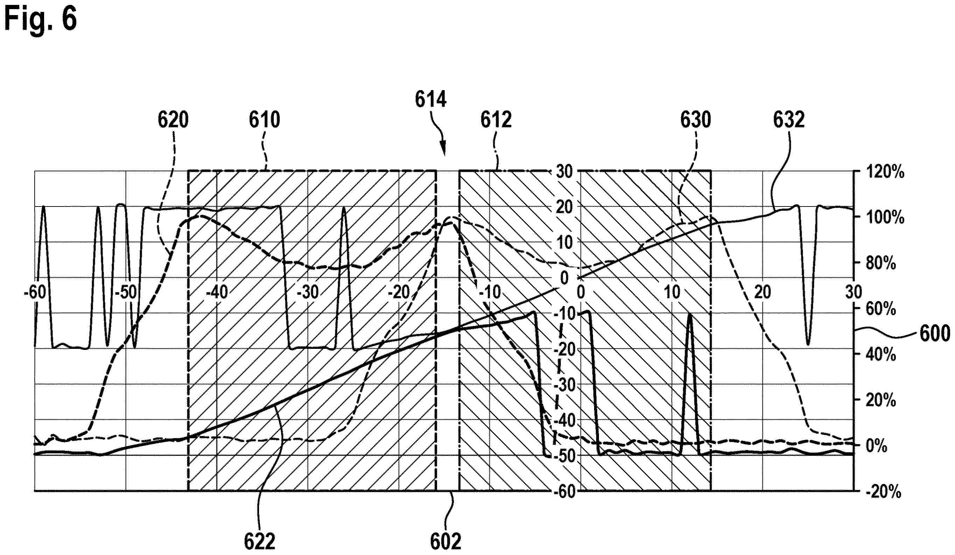

It can be seen that when the target element moves from the left to the right (in Fig. 6), i.e., from a first pre-defined range (e.g. area 610) towards a second pre-defined range (e.g. area 612), there is a position range where both sensing elements generate a signal.

In order to generate a common signal from both position signals 622, 632, the signals can be mixed. For example, when a position of a target element is within the first pre-defined range, e.g., 610, the position signal 622 is used for the common position signal. When the position of the target element is within the second pre-defined range, e.g. 612, the position signal 632 is used for the common position signal. And when the position of the target element is within an intermediate range, e.g., 614, an intermediate signal determined based on the position signals 622, 632 is used for the common position signal. Thus, when a position of a respective target element is within a first pre-defined range of the first sensing element, the first position signal is used for the common position signal, when the position of the respective target element is within second pre-defined range of the second sensing element, the second position signal is used for the common position signal, and when the position of the respective target element is within an intermediate range between the first pre-defined range and the second pre-defined range, an intermediate signal determined based on the first and the second position signal is used for the common position signal.

For example, the intermediate signal is determined based on the position signals 622, 632 such that a proportion of the position signal 622 used decreases with the position moving from 610 towards 612 and that a proportion of the position signal 632 used increases with the position moving from 610 towards 612. For example, the proportion of signal 622 can linearly be decreased from 100% to 0% within transition zone 614, and the proportion of the signal 632 can linearly be increased from 0% to 100%.

## Claims

1. A position detecting system (460, 560) configured for detecting a position of a movable element (150, 350, 450) that is movable, in a moving direction (R), relative to a static element (105), the position detecting system comprising:
two sensing element rows (461, 462; 561, 562), to be provided at the static element, and
a target element set (465, 565) comprising two target elements (467, 468; 567, 568), to be provided at the moving element;
wherein each of the two sensing element rows comprises multiple sensing elements (463, 563) arranged one after the other along the sensing element row,
wherein the two sensing element rows are arranged essentially parallel to each other and along the moving direction (R) such that the multiple sensing elements of the two sensing element rows are aligned with respect to each other,
wherein the two target elements of the target element set are arranged such that each of the two target elements faces a respective one of the two sensing element rows, and such that the two target elements are spaced apart from each other in the moving direction,
wherein each of the sensing elements is configured, upon operation, to generate a signal when one of the two target elements faces the sensing element and is located within a pre-defined distance of the sensing element.

2. The position detection system (460, 560) of claim 1, wherein for each of the two sensing element rows, for each pair of sensing elements arranged consecutively in the moving direction, ends of the sensing elements of the pair that face each other are spaced apart from each other in the moving direction by a pre-defined sensing element distance.

3. The position detection system (460, 560) of claim 2, wherein ends of the two target elements that face each other in the moving direction are spaced apart from each other in the moving direction by a pre-defined target element distance, wherein the pre-defined target element distance is equal to or greater than the pre-defined sensing element distance.

4. The position detection system (460, 560) of claim 2 or 3, wherein a length of each of the two target elements in the moving direction is equal to or less than the pre-defined sensing element distance.

5. The position detection system (460, 560) of any one of the preceding claims, further configured for detecting a position of a further movable element that is movable, in the moving direction, relative to the static element, wherein the movable element and the further movable element are configured to assume a minimum distance to each other in the moving direction,
the position detecting system (460, 560) comprising: a further target element set comprising two target elements, to be provided at the further moving element,
wherein a length of each of the sensing elements is equal to or less than the minimum distance.

6. A method for detecting a position of a movable element that is movable, in a moving direction, relative to a static element,
wherein two sensing element rows are provided at the static element, and a target element set comprising two target elements is provided at the moving element;
wherein each of the two sensing element rows comprises multiple sensing elements arranged one after the other along the sensing element row,
wherein the two sensing element rows are arranged essentially parallel to each other and along the moving direction such that the multiple sensing elements of the two sensing element rows are aligned with respect to each other,
wherein the two target elements of the target element set are arranged such that each of the two target elements faces a respective one of the two sensing element rows, and such that the two target elements are spaced apart from each other in the moving direction,
the method comprising:
operating the sensing elements such that each of the sensing elements generates a signal when one of the two target elements faces the sensing element and is located within a pre-defined distance of the sensing element;
receiving position signals from one or more of the sensor elements of the position detection system;
determining, based on the position signals, a position of the movable element, in particular relative to the static element; and
providing an information about the position of the movable element.

7. The method of claim 6, wherein the position signals comprise:
a first position signal (620) from a first sensing element of one of the two sensor element rows, and a second position signal (630) from a second sensing element of said one of the two sensor element rows, wherein the first sensing element and the second sensing element are arranged consecutively in the moving direction,
wherein determining, based on the position signals (620, 630), the position of the movable element comprises:
generating a common position signal based on the first position signal and the second position signal, such that:
when a position of a respective target element is within a first pre-defined range of the first sensing element, the first position signal is used for the common position signal,
when the position of the respective target element is within second pre-defined range of the second sensing element, the second position signal is used for the common position signal, and
when the position of the respective target element is within an intermediate range between the first pre-defined range and the second pre-defined range, an intermediate signal determined based on the first and the second position signal is used for the common position signal; and
determining the position of the movable based on the common position signal.

8. The method of claim 7, wherein the intermediate signal is determined based on the first and the second position signal such that a proportion of the first position signal used decreases with the position moving from the first pre-defined range towards the second pre-defined range and that a proportion of the second position signal used increases with the position moving from the first pre-defined range towards the second pre-defined range.

9. A data processing device comprising a processor configured to perform the method of any one of claims 6 to 8.

10. A linear motor conveying system (100), comprising a track system (105) having one or more track modules defining a conveying path, a carrier module, and the position detecting system of any one of claims 1 to 5,
wherein the track system is configured to receive the carrier module (350, 450),
wherein the carrier module is received or receivable in the track system, to be guided in the track system and movable in a moving direction in the conveying path,
wherein the two sensing element rows are provided at the track system as the static element, and
wherein the two target elements are provided at the carrier module as the movable element.

11. The linear motor conveying system (100) of claim 10, wherein the track system comprises, along at least part of the conveying path (P), a first side part (111, 311), a second side part (112, 312) and a bottom part (113, 313), wherein the first side part and the second side part are arranged opposite to each other, and
wherein the track system is configured to receive the carrier module (350, 450) between the first side part (111, 311) and the second side part (112, 312).

12. The linear motor conveying system (100) of claim 11 wherein a first one of the two sensing element rows is provided at the first side part and a second one of the two sensing element rows is provided at the second side part, and
wherein the two target elements are provided at said carrier module, such that a first one of the two target elements faces the first one of the two sensing element rows and a second one of the two target elements faces the second one of the two sensing element rows.

13. The linear motor conveying system (100) of claim 12, wherein the first one of the two sensing element rows is provided at an upper side of the first side part and the second one of the two sensing element rows is provided at an upper side of the second side part, and
wherein the two target elements are provided at an upper side of said carrier module.

14. The linear motor conveying system (100) of claim 11, wherein the two sensing element rows are provided at the bottom part, preferably arranged next to each other, and
wherein the two target elements are provided at a lower side of said carrier module, such that the two target elements face the two sensing element rows.

15. The linear motor conveying system (100) of any one of claims 10 to 14, further comprising a controlling system (190) for controlling the linear motor conveying system (100) to move the carrier module within the track system, based on at least one position signal received from the position detecting system, preferably, wherein the controlling system comprises the data processing device of claim 9.
